Europäisches Patentamt

European Patent Office

Office européen des brevets

(11) Numéro de publication: **0 108 018**
**B1**

(12) **FASCICULE DE BREVET EUROPEEN**

(19)

(45) Date de publication du fascicule du brevet:
07.01.87

(21) Numéro de dépôt: **83402087.7**

(22) Date de dépôt: **26.10.83**

(51) Int. Cl.⁴: **B 60 R 22/36**

(54) **Dispositif de blocage pour enrouleur de ceinture de sécurité.**

(30) Priorité: **27.10.82 FR 8218019**

(43) Date de publication de la demande:
**09.05.84 Bulletin 84/19**

(45) Mention de la délivrance du brevet:
**07.01.87 Bulletin 87/2**

(84) Etats contractants désignés:
**AT BE CH DE GB IT LI LU NL SE**

(56) Documents cités:
**DE - A - 2 256 184**
**US - A - 3 343 765**

(73) Titulaire: **GENERAL ENGINEERING B.V.,**
**Papenbroeksteeg 2, NL-1012 NW Amsterdam (NL)**

(72) Inventeur: **Weman, P., c/o N.V. Klippan S.A.**
**Researchpark Grauwmeer 1, B-3030 Hervelee-Leuven**
**(BE)**

(74) Mandataire: **Debay, Yves et al, NOVAPAT-CABINET**
**CHEREAU 107, boulevard Péreire, F-75017 Paris (FR)**

ACTORUM AG

## Revendications

La présente invention concerne un dispositif de blocage pour enrouler de ceinture de sécurité.

On connaît dans l'art antérieur un certain nombre de dispositifs d'enrouleurs de ceinture de sécurité. Ceux-ci sont généralement aptes à prévenir le déroulement de la sangle dans certaines conditions afin d'immobiliser l'utilisateur de la ceinture sur son siège, en cas d'accident notamment. Les enrouleurs actuellement connus sont généralement pourvus à cet effet de dispositifs de détection dits «sensibilité sangle» et «sensibilité véhicule», détectant respectivement une accélération du brin de sangle et une accélération du véhicule supérieures à une valeur prédéterminée, le dispositif «sensibilité véhicule» étant également propre à détecteur une inclinaison anormale du véhicule. Ces dispositifs de détection permettent d'actionner un dispositif de blocage qui prévient tout déroulement ultérieur de la sangle.

On connaît par ailleurs un certain nombre d'enrouleurs dans lesquels un tambour récepteur de sangle est monté sur une pièce intermédiaire mobile en translation par rapport au châssis principal de l'enrouleur ou pivotant par rapport à celui-ci, cette disposition permettant notamment le mouvement du tambour récepteur en direction d'un organe de butée afin d'interrompre le déroulement de la sangle. Plus précisément, les dents d'une roue à rochet montée coaxialement au tambour récepteur peuvent être amenées en position d'engagement avec une butée solidaire du châssis principal lorsque les conditions de déclenchement sont requises. Un tel dispositif est par exemple décrit dans la demande de brevet européen EP-A-0077494 publiée le 27 avril 1983.

Dans le cas où le blocage est provoqué par une action du dispositif dit «sensibilité sangle», un équipage tournant comprenant au moins le tambour et une roue à rochet est déplacé sous l'effet d'une traction brusque exercée sur la sangle, et la face avant d'une des dents de la roue à rochet vient porter contre un organe d'arrêt de puissance solidaire du châssis principal.

Dans le cas où le blocage est provoqué par une action du dispositif dit «sensibilité véhicule», un cliquet de blocage appartenant à ce dispositif, actionné par un élément pesant, vient en engagement avec une dent de la roue à rochet de façon à entraver le mouvement de rotation de celle-ci, cette entrave au mouvement de rotation de la roue à rochet n'étant pas suffisante en elle-même pour assurer le blocage de la sangle en raison des dimensions réduites du cliquet mais étant en revanche suffisante pour provoquer un déplacement de l'équipage tournant jusqu'à ce que la roue à rochet vienne au contact de l'organe d'arrêt, assurant ainsi le blocage effectif de la sangle.

Compte tenu de la position déterminée du cliquet, il est possible de prévoir exactement la position nécessaire de l'organe d'arrêt pour que la face avant d'une dent s'applique franchement sur l'organe d'arrêt lorsque le mouvement de la roue est entravé par le cliquet.

Au contraire, dans le fonctionnement en «sensibilité sangle», il existe une double incertitude concernant la position dans laquelle la dent de la roue à rochet qui doit coopérer avec l'organe d'arrêt aborde celui-ci.

La première incertitude résulte de l'indétermination a priori de la valeur de l'accélération de la sangle. En effet, plus cette accélération est grande, plus le mouvement de la roue à rochet en direction de l'organe d'arrêt est rapide et plus la butée de la dent sur l'organe d'arrêt a lieu tôt.

La deuxième incertitude résulte de l'indétermination a priori de la position angulaire de la roue à rochet au moment où elle commence à être soumise à la force de traction. La dent de la roue à rochet qui vient en contact avec la surface de butée du châssis principal peut donc se trouver dans une position angulaire telle que c'est le sommet de cette dent qui heurte la châssis principal. Il peut alors s'en suivre un dérapage ou même un sautillement, une ou plusieurs dents de la roue à rochet passant devant l'organe d'arrêt avant que le blocage effectif ne soit réalisé. Il va de soi que ce retard est préjudiciable à la sécurité de l'utilisateur de la ceinture de sécurité.

Un objet de la présente invention est de réaliser un blocage effectif immédiat d'un enrouleur de sangle de ceinture de sécurité, notamment dans le cas où celui-ci comporte un tambour récepteur de sangle mobile par rapport à un châssis principal indépendamment de sa rotation sur lui-même et ce y compris lorsque le blocage intervient en «sensibilité sangle».

Un autre objet de la présente invention est de faire en sorte que la position angulaire dans laquelle une roue à rochet d'enrouleur vient en engagement avec un organe d'arrêt dans le cas d'une accélération excessive de la sangle soit prédéterminée avec précision, et ce quelle que soit l'intensité de la force de traction qui s'exerce sur la sangle.

Pour ce faire, la présente invention selon les caractéristiques de la deuxième partie de la revendication 1, prévoit de provoquer le fonctionnement du dispositif dit «sensibilité véhicule» dans tous les cas, c'est-à-dire y compris dans les cas où le dispositif dit «sensibilité sangle» était jusqu'à présent le seul à entrer en action. Pour ce faire, on prévoit un élément de liaison entre, d'une part, une pièce intermédiaire entre le tambour récepteur et le châssis principal et, d'autre part, le dispositif dit «sensibilité véhicule», cet élément de liaison étant susceptible d'actionner ce dispositif lorsque le châssis intermédiaire se déplace sous l'action d'une accélération de la sangle supérieure à un seuil prédéterminé.

D'autres caractéristiques et avantages de la présente invention ressortiront de la description suivante d'un mode de réalisation donné à titre illustratif mais nullement limitatif, faite en relation avec les dessins annexés sur lesquels:

La fig. 1 représente, en vue en plan, un enrouleur selon l'invention en coupe partielle selon la ligne I–I de la fig. 2;

la fig. 2 est une vue de côté, partiellement en coupe, de l'enrouleur de la fig. 1 pourvu de son boîtier;

la fig. 3 est une vue partiellement en coupe suivant les flèches III–III de la fig. 1;

la fig. 4 est une vue de côté de châssis intermédiaire, et

la fig. 5 est une vue en plan de châssis intermédiaire.

Comme représenté sur les figures, l'enrouleur comprend un châssis support 1 sous la forme d'un cadre sensiblement plat, définissant une ouverture centrale d'allure générale rectangulaire 2 et comprenant un prolongement inférieur dans lequel est formée une ouverture 3 servant à recevoir un boulon de fixation de l'enrouleur sur un châssis du véhicule. L'enrouleur comprend un tambour d'enroulement de sangle 4, solidaire d'un arbre d'enroulement 5 auquel sont également solidarisées une première roue à rochet 6 et une seconde roue à rochet 7 montées au voisinage des extrémités longitudinales opposées du tambour 4. Sur une partie de l'arbre 5 est montée de façon à librement tourner une coupelle cylindrique 8 renfermant le ressort de rappel de rembobinage 9, dont l'extrémité intérieure est engagée dans une fente longitudinale 10 formée dans l'arbre 5, l'extrémité extérieure du ressort 9 étant solidarisée à la paroi périphérique cylindrique de la coupelle 8. Les zones d'extrémité de l'arbre 5 tourillonnent dans des alésages 11 formés dans des moyens de palier 12 d'une structure de châssis intermédiaire 13. L'arbre 5 est maintenu en place dans les paliers 12 par des rondelles de maintien 14.

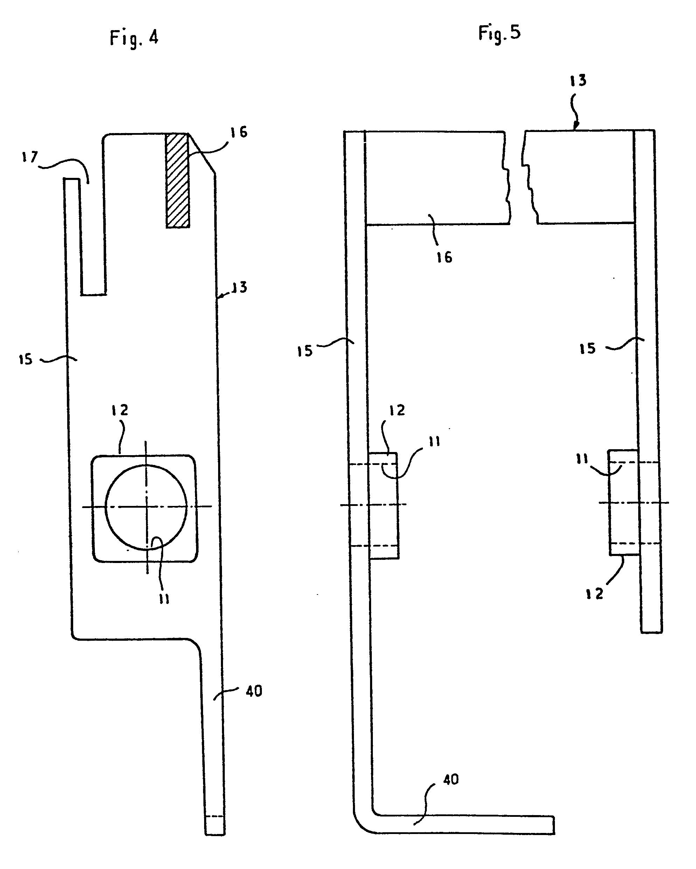

Comme on le voit sur les fig. 4 et 5, le châssis intermédiaire 13 comporte deux branches latérales 15 formant, au voisinage de leurs extrémités inférieures, les moyens de palier 12 et reliées à leur sommet par un voile transversal 16. Les branches 15 comportent chacune à leur extrémité supérieure une fente longitudinale 17 décalée par rapport au voile 16 et destinée à recevoir, en configuration de montage de l'enrouleur, la partie transversale supérieure 18 du châssis support 1 également décalée par rapport au plan principal du châssis support et parallèle à ce dernier.

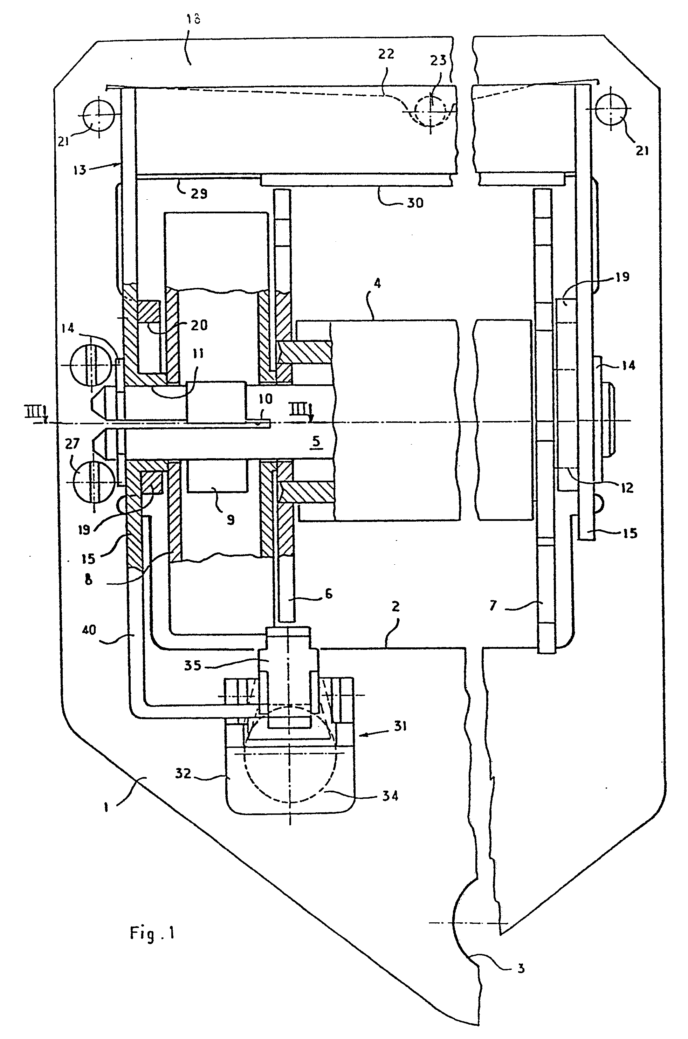

Comme on le voit sur les fig. 1 à 3, le châssis support 1 en forme de cadre comprend, au niveau de la partie médiane de l'ouverture 2, deux petites ailes parallèles 19 rabattues perpendiculairement au plan principal du cadre à partir des bords latéraux de l'ouverture 2. Dans ces petites ailes sont formées des ouvertures rectangulaires alignées 20 dans lesquelles sont reçues les parties en saillie des moyens de palier 12 du châssis intermédiaire 13 qui présentent un pourtour rectangulaire ou carré de largeur coïncidant sensiblement avec la largeur des ouvertures 20 de façon à pouvoir se déplacer en étant guidées de haut en bas dans ces dernières conjointement avec l'ensemble de l'équipage constitué de l'arbre 5, du tambour d'enroulement 4, des roues à rochet 6 et 7 et de l'ensemble ressort 9/coupelle de ressort 8. Outre le guidage au moyen de la partie transversale supérieure 18 du cadre 1 dans les fentes 17, le châssis intermédiaire 13 est guidé dans son déplacement vertical de façon à ne pas pouvoir pivoter dans le plan du châssis support par des éléments 21 faisant saillie par rapport au plan du châssis support 1 et coopérant avec les bords externes des branches 15. Le châssis intermédiaire 13 est rappelé vers le bas, c'est-à-dire dans la configuration de repos de l'équipage coulissant, par un ressort calibré, qui peut être constitué d'un ressort à lame 22 prenant appui sur les extrémités supérieures des ailes 15 du châssis 13 et, centralement, une saillie 23 du châssis support 1.

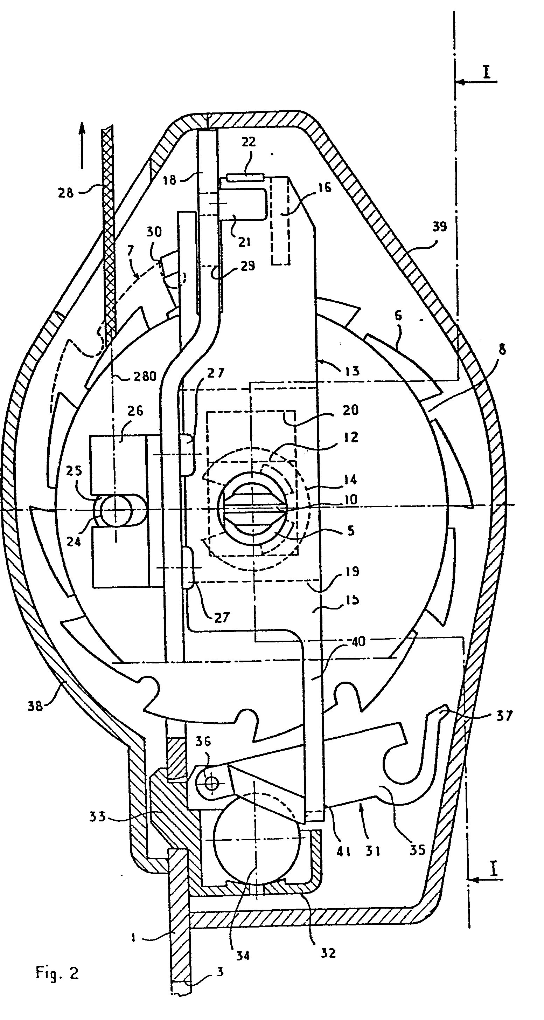

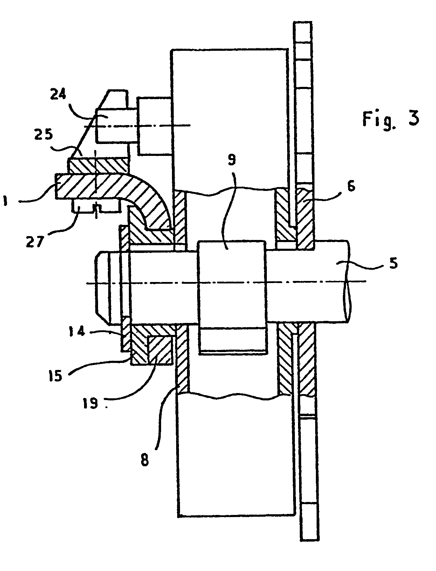

Comme on le voit sur les fig. 2 et 3, la coupelle de ressort 8 est montée de façon à pouvoir librement tourner autour de l'extrémité de l'arbre 5, mais comprend, rapportée sur sa face plane externe, une saillie 24 destinée à être reçue dans une ouverture 25 d'une pièce ou fourchette de rétention 26 fixée au moyen de vis 27 sur la face arrière de la zone latérale du châssis support 1.

Comme on le voit en traits pleins sur la fig. 2, dans la position de repos, les dents des roues à rochet 6 et 7 passent sans encombre, lors d'une vitesse de rotation relativement constante de l'équipage tournant, au voisinage du bord inférieur 29 de la partie transversale supérieure 18 du châssis support, dont une partie est déportée angulairement vers l'arrière pour constituer une surface du butée 30 pour les dents des roues à rochet. Lorsque l'équipage tournant est déplacé vers le haut à l'encontre de la force du ressort 22, sous l'effet d'une traction brusque exercée sur le brin de sangle 28, les faces avant des dents des roues à rochet 6 et 7 viennent porter contre la surface de butée 30 comme figuré en traits pointillés sur la fig. 2, en empêchant ainsi tout dévidage ultérieur de la sangle, pour garantir ainsi le blocage à sensibilité sangle.

L'enrouleur comprend également un dispositif de blocage intertiel 31 comprenant un boîtier support formant coupelle 32 solidaire d'une patte de montage 33 reçue dans un évidement formé dans la partie intérieure du châssis support 1. La coupelle 32 forme un siège d'appui profilé pour une bille pesante 34, coopérant avec un cliquet de blocage 35 monté articulé en une extrémité 36 sur le boîtier support 32 et terminé par un bras de blocage élastique 37 susceptible de se déplacer angulairement (comme indiqué par l'angle α) sous l'effet d'un déplacement de la bille 34 résultant d'une accélération ou d'une inclinaison, notamment en cas d'accident, pour venir coopérer en engagement avec les dents de la roue à rochet 6 et assurer ainsi, de façon connue, la fonction de sécurité de blocage à «sensibilité véhicule». L'enrouleur peut être logé dans un boîtier constitué de deux demi-coquilles 38 et 39.

Conformément à la présente invention, le châssis intermédiaire 13 comporte un élément de liaison 40 en forme de crochet. L'élément de liaison 40 est ici solidaire d'une des ailes 15 du châssis intermédiaire 13 et fait avantageusement partie intégrante de celle-ci. L'élément de liaison 40 a la forme générale d'un L globalement situé dans un plan parallèle au plan principal du châssis support, l'une des branches du L se trouvant dans le prolongement d'une des ailes 15 du châssis intermédiaire. L'autre branche du L se trouve au repos à proximité immédiate du cliquet 35 du dispositif dit «sensibilité véhicule».

En liaison avec la fig. 2, on peut voir que l'élément de liaison 40 étant intercalé entre l'extrémité de préhension 37 du cliquet et le point d'articulation 36 de celui-ci, un déplacement vers le haut de l'élément de liaison entraînera un déplacement du cliquet, l'extrémité de préhension de celui-ci décrivant une trajectoire circulaire en direction de la roue à rochet.

On suppose à présent qu'une traction subite exercée sur la sangle 28 provoque une accélération de celle-ci supérieure à un seuil prédéterminé. Le châssis intermédiaire a alors tendance à se déplacer vers le haut d'une distance a entraînant dans son mouvement l'élément de liaison 40 dont il est solidaire. Il en résulte que ce dernier actionne à son tour le cliquet 35 du dispositif dit «sensibilité véhicule», l'extrémité de préhension 37 du cliquet se déplaçant alors pour venir en engagement avec la roue à rochet 6. Comme dans le cas d'un fonctionnement direct du dispositif de «sensibilité véhicule», la roue à rochet, qui se trouve à la fois soumise à l'action de l'extrémité de préhension 37 du cliquet et à la traction de la sangle, se déplace vers le haut avec le châssis intermédiaire et vient porter contre la surface de butée 30 du châssis principal. La distance angulaire entre la dent de la roue à rochet 6 qui vient en engagement avec le cliquet de blocage 31 et la dent de cette même roue à rochet qui vient en engagement avec la surface de butée 30 du châssis principal étant convenablement déterminée, cette dernière ne risque pas de venir en engagement avec la surface de butée 30 par sa pointe et le risque de sautillement ou de dérapage de la dent de la roue à rochet par rapport au châssis principal se trouve éliminé.

Pour que le dispositif objet de l'invention fonctionne convenablement de la manière décrite ci-dessus, il est nécessaire que l'extrémité de préhension 37 du cliquet 35 entraîné par l'élément de liaison 40 vienne en engagement avec la roue 6 avant que celle-ci n'atteigne l'organe d'arrêt de puissance 30. Ceci est conditionné par les positions respectives du point d'articulation 36 du cliquet 35 et du point de contact 41 de l'élément de liaison 40 avec le cliquet. Plus particulièrement, il convient de placer le point de contact 41 aussi près que possible du point d'articulation 36, afin d'amplifier le plus possible le mouvement de l'extrémité de préhension 37 du cliquet.

Selon un autre mode de réalisation de l'invention, l'enrouleur comportant le dispositif de blocage objet de l'invention peut ne comporter qu'une roue à rochet assurant le blocage au lieu de deux.

De même, la pièce intermédiaire sur laquelle est monté le tambour d'enroulement a été décrite dans le cas où elle coulisse par rapport au châssis support principal, elle pourrait être montée à pivotement sur celui-ci d'une façon connue en soi. La pièce intermédiaire peut également être réduite à une paire de bagues, réunies ou non entre elles, intercalées entre l'axe du tambour d'enroulement et une lumière du châssis principal.

**Revendications**

1. Dispositif de blocage pour enrouleur de ceinture de sécurité, l'enrouleur comprenant: un châssis principal (1), un tambour d'enroulement de sangle (4), au moins une pièce intermédiaire (13) entre le tambour et le châssis principal, au moins une roue dentée (6) se déplaçant en même temps que le tambour, un dispositif (31) de détection d'accélération du véhicule comportant un moyen (35) pouvant entraver le mouvement de la roue dentée, et un organe de blocage (30) de la roue dentée sous l'action d'accélération de la sangle ou sous l'action d'accélération du véhicule, le tambour d'enroulement de sangle (4) et la pièce intermédiaire (13) étant mobiles par rapport au châssis principal (1), caractérisé en ce que la pièce intermédiaire (13) comporte un élément de liaison (40) disposé pour entraîner en déplacement le moyen (35) pouvant entraver le mouvement de la roue dentée et l'amener en engagement avec la roue dentée (6).

2. Dispositif de blocage selon la revendication 1, caractérisé en ce que l'élément de liaison (40) fait partie intégrante de la pièce intermédiaire (13).

3. Dispositif selon la revendication 1 ou la revendication 2, caractérisé en ce que l'élément de liaison (40) a la forme générale d'un L.

4. Dispositif selon l'une des revendications précédentes, caractérisé en ce que la pièce intermédiaire est un châssis (13) en coulissement par rapport au châssis principal (1).

**Patentansprüche**

1. Sperrvorrichtung für Sicherheitsgurtaufroller, wobei der Aufroller aufweist: ein Hauptgehäuse (1), eine Aufwickeltrommel (4) für das Gurtband, wenigstens ein Zwischenteil (13) zwischen der Trommel und dem Hauptgehäuse, wenigstens ein Zahnrad (6), das sich gleichzeitig mit der Trommel bewegt, eine Anordnung (31) zur Messung der Beschleunigung des Fahrzeugs mit einer Anordnung (35), die die Bewegung des Zahnrades hemmen kann und ein Teil (30) zur Sperrung des Zahnrades unter der Beschleunigungswirkung des Gurtbandes oder unter der Beschleunigungswirkung des Zahnrades, wobei die Aufwickeltrommel (4) für das Gurtband und das Zwischenteil (13) beweglich bezüglich des Hauptgehäuses (1) sind, dadurch gekennzeichnet, dass das Zwischenteil (13) ein Verbindungselement (40) aufweist, das derart angeordnet ist, dass es eine Verschiebung der Anordnung (35) bewirken kann zur Hemmung der Bewegung des Zahnrades und es in Eingriff mit dem Zahnrad (6) bringen kann.

2. Sperrvorrichtung nach Anspruch 1, dadurch gekennzeichnet, dass das Verbindungselement (40) ein fester Bestandteil des Zwischenteils (13) ist.

3. Vorrichtung nach Anspruch 1 oder 2, dadurch gekennzeichnet, dass das Verbindungselement (40) die allgemeine Form eines L aufweist.

4. Vorrichtung nach einem der vorhergehenden Ansprüche, dadurch gekennzeichnet, dass das Zwischenteil ein bezüglich des Hauptgehäuses 1 gleitendes Gehäuse 13 ist.

**Claims**

1. A locking device for use in a safety belt reel, said reel including: a main frame (1), a webbing winding drum (4), at least an intermediate member (13) between the drum and the main frame, at least a toothed wheel (6) moving at the same time as said drum, a detection device (31) to detect the vehicle acceleration including means (35) which is capable of hindering said toothed wheel movement, and a locking member (30) to lock said toothed wheel through the accelerating effect of the webbing or the accelerating effect of the vehicle, said webbing winding drum (4) and said intermediate member (13) being movable in relation to said main frame (1), wherein said intermediate member (13) includes a link element (40) disposed so as to movably drive said means (35) capable of hindering said toothed wheel movement and to bring it into engagement with said toothed wheel (6).

2. The locking device of claim 1, wherein said link element (40) is an integral part of said intermediate member (13).

3. The locking device of claim 1 or claim 2, wherein said link element (40) has generally a L-shape.

4. The locking device of any preceding claim, wherein said intermediate member (13) includes a frame (13) which can slide in relation to said main frame (1).

Fig.1

0108018

Fig. 2

0108018

Fig. 3

Fig. 4

Fig. 5